# EUROPEAN PATENT APPLICATION

(11) **EP 1 569 095 A1**
(43) Date of publication of application: **31.08.2005**
(21) Application number: 04251157.6
(22) Date of filing: 27.02.2004
(51) Int. Cl.: G06F 9/44

(54) **System and method for presentation of wireless application data using repetitive UI layouts**

(71) Applicant: Research In Motion Limited, Ontario N2L 3W8 (CA)
(72) Inventor: Vitanov, Kamen B., Toronto Ontario M6P 2P4 (CA); Shenfield, Michael, Richmond Hill Ontario, L4C 3S9 (CA); Fritsch, Brindusa L., Toronto Ontario M9C 2J9 (CA)
(74) Representative: Rickard, David John

(57) **Abstract**

A Repetitive Layout scheme is provided that operates on a collection of data objects, such that each data object accords to the same data object definition (data model) expressed in a structured definition language. The Repetitive Layout consists of one UI section repeated for every object in the collection. Each UI section is composed of a set of UI controls or sub-layouts. The UI controls in each section are associated with the data fields of the corresponding data object. A user of a wireless application interacting with the data objects can select UI sections and edit the controls within them via the user interface of the wireless device executing the application. Any modifications are propagated to the data objects mapped to the respective UI sections. Similarly, all modifications (driven by the application logic or incoming server messages) to the data objects are reflected in the UI section mapped to these objects. The generation and application of the repetitive layout scheme can include the steps: dynamic data entity generation (Data Composer stage); determining the collection of data objects that need to be presented by the user interface (Rules Engine stage); sorting the collection of data objects (Sorting Processor stage); generating the UI Layout (Layout Generator stage); propagating UI changes back to the Data Model having the definitions of the data objects (Data Dispatcher stage); propagating data changes to the Repetitive Layout; and propagating changes to nodes of the data model.

## Description

### BACKGROUND OF THE INVENTION

This application relates generally to presentation of applications on a user interface of a wireless device.

There is a continually increasing number of wireless devices in use today, such as mobile telephones, PDAs with wireless communication capabilities, and two-way pagers. Software applications which run on these devices increase their utility. For example, a mobile phone may include an application which retrieves the weather for a range of cities, or a PDA may include an application that allows a user to shop for groceries. These software applications take advantage of the connectivity to a network in order to provide timely and useful services to users. However, due to the restricted resources of some devices, and the complexity of delivering large amounts of data to the devices, developing software applications for a variety of devices remains a difficult and time-consuming task.

Currently, devices are configured to communicate with Web Services through Internet based Browsers and/or native applications. Native applications have the advantage of being developed specifically for the type of device platform, thereby providing a relatively optimized application program for each runtime environment. However, native applications have disadvantages of not being platform independent, thereby necessitating the development multiple versions of the same application, as well as being relatively large in size, thereby taxing the memory resources of the device. Further, application developers need experience with programming languages such as Java and C++ to construct these hard coded native applications. There is a need for application programs that can be run on client devices having a wide variety of runtime environments, as well as having a reduced consumption of device resources.

It is desirable to provide the maximum degree of flexibility and efficiency in defining component screens of a wireless application that manage the application presentation on a wireless device, using a dynamic and interactive user interface (UI). Due to limitations of wireless device resources, it is important to have a method for efficient application data representation that uses reduced executable code.

The systems and methods disclosed herein provide a repetitive layout environment to obviate or mitigate at least some of the above presented disadvantages.

### SUMMARY OF THE INVENTION

It is desirable to provide a degree of flexibility and efficiency in defining screens of a wireless application that manage the application presentation on a wireless device, using a dynamic and interactive user interface (UI). Due to limitations of wireless device resources, it is important to have a method for efficient application data representation that uses reduced executable code. Contrary to current systems and methods for generation of UI screens, a Repetitive Layout scheme is provided that operates on a collection of data objects, such that each data object accords to the same data object definition (data model) expressed in a structured definition language. The Repetitive Layout consists of one UI section repeated for every object in the collection. Each UI section is composed of a set of UI controls or sub-layouts. The UI controls in each section are associated with the data fields of the corresponding data object. A user of a wireless application interacting with the data objects can select UI sections and edit the controls within them via the user interface of the wireless device executing the application. Any modifications are propagated to the data objects mapped to the respective UI sections. Similarly, all modifications (driven by the application logic or incoming server messages) to the data objects are reflected in the UI section mapped to these objects. The generation and application of the repetitive layout scheme can include the steps: dynamic data object generation (Data Composer stage); determining the collection of data objects that need to be presented by the user interface (Rules Engine stage); sorting the collection of data objects (Sorting Processor stage); generating the UI Layout (Layout Generator stage); propagating UI changes back to the Data Model having the definitions of the data objects (Data Dispatcher stage); propagating data changes to the Repetitive Layout; and propagating changes to nodes of the data model.

According to the present invention there is provided a method for generating a layout for a wireless application for display on a user interface (UI) of a wireless device, the layout having a selected UI section format repeated for every data object in a collection of data objects, the method comprising the steps of: determining the collection of data objects for presentation on the user interface, each of the data objects in the collection being an instance of the same data model having a first data field definition for defining a first data field of each of the data objects, the first data field definition expressed in a structured definition language; associating a respective UI control to the first data field of each of the data objects according to the first data field definition; assigning each of the UI controls to a respective one of the UI sections; mapping each of the UI sections to a respective one of the data objects to form a plurality of UI section and data object pairs; recording each of the mappings for each pair in a reference table; and initializing the layout on the user interface; wherein the states of the UI controls are changed through user events via the user interface.

According to a further aspect of the present invention there is provided a system for generating a layout for a wireless application for display on a user interface (UI) of a wireless device, the layout having a selected UI section format repeated for every data object in a collection of data objects, the system comprising: a rules engine for determining the collection of data objects for presentation on the user interface, each of the data objects in the collection configured for being an instance of the same data model having a first data field definition for defining a first data field of each of the data objects, the first data field definition expressed in a structured definition language; a layout generator for associating a respective UI control to the first data field of each of the data objects according to the first data field definition, and for assigning each of the UI controls to a respective one of the UI sections; a data module for mapping each of the UI sections to a respective one of the data objects to form a plurality of UI section and data object pairs, and for recording each of the mappings for each pair in a reference table; and a UI service for initializing the layout on the user interface; wherein the states of the UI controls are changed through user events via the user interface.

According to a still further aspect of the present invention there is provided a computer program product for generating a layout for a wireless application for display on a user interface (UI) of a wireless device, the layout having a selected UI section format repeated for every data object in a collection of data objects, the computer program product comprising: a computer readable medium; a rules engine module stored on the computer readable medium for determining the collection of data objects for presentation on the user interface, each of the data objects in the collection configured for being an instance of the same data model having a first data field definition for defining a first data field of each of the data objects, the first data field definition expressed in a structured definition language; a layout generator module stored on the computer readable medium for associating a respective UI control to the first data field of each of the data objects according to the first data field definition, and for assigning each of the UI controls to a respective one of the UI sections; a data module stored on the computer readable medium for mapping each of the UI sections to a respective one of the data objects to form a plurality of UI section and data object pairs, and for recording each of the mappings for each pair in a reference table; and a UI service module stored on the computer readable medium for initializing the layout on the user interface; wherein the states of the UI controls are changed through user events via the user interface.

### BRIEF DESCRIPTION OF THE DRAWINGS

These and other features will become more apparent in the following detailed description in which reference is made to the appended drawings by way of example only, wherein:
Figure 1 is a block diagram of a wireless device;
Figure 2 is a further view of a screen manager service of the framework of Figure 1;
Figure 3 is an example repetitive layout representation of an application on a user interface of the device of Figure 1; and
Figure 4 shows Dynamic Generation of the Repetitive Layout of Figure 3.

### DESCRIPTION OF THE PREFERRED EMBODIMENTS

### Device Environment

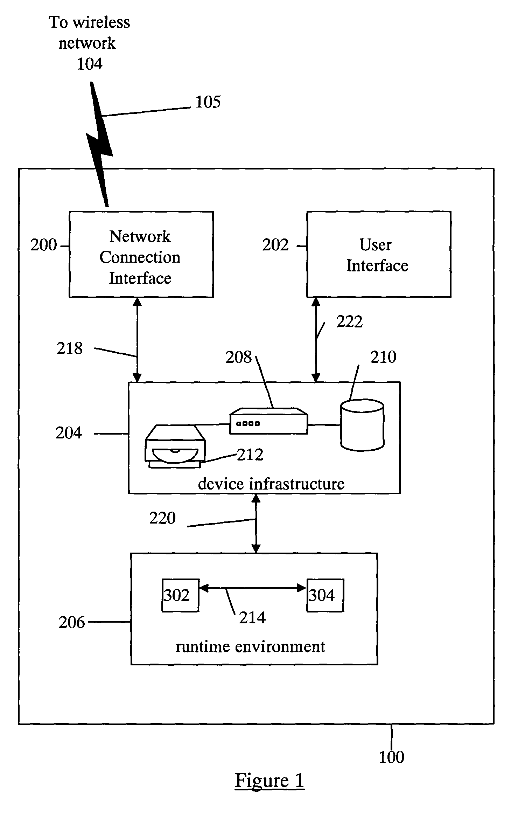

Referring to Figure 1, a wireless device 100 transmits and receive requests/response messages 105, respectively, when in communication with a wireless network 104. The device 100 can operate, for example as web clients of a web services (not shown) connected to the network 104 by using the requests/response messages 105 in the form of message header information and associated data content, for example requesting and receiving product pricing and availability from an on-line merchant. The web service is an example of a system with which client application programs 302, executed by an intelligent runtime environment framework 206 of the device 100, interact via the wireless network 104 in order to provide utility to users of the device 100. The application programs 302 of the device 100 can use the business logic of the web service similarly to calling a method on an object (or a function). It is recognized that the client application program 302 can be downloaded/uploaded via the network 104 directly to the devices 100. It is further recognized that the devices 100 can communicate with one or more web services via the network 104.

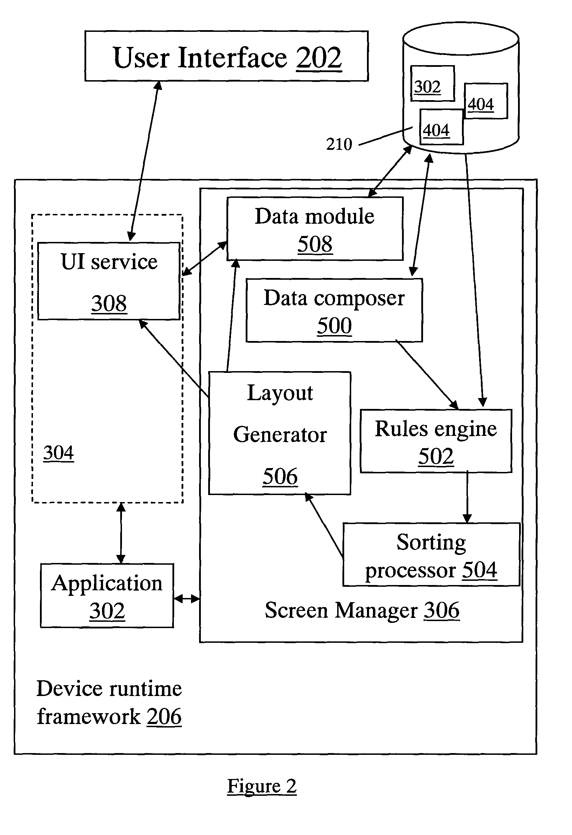

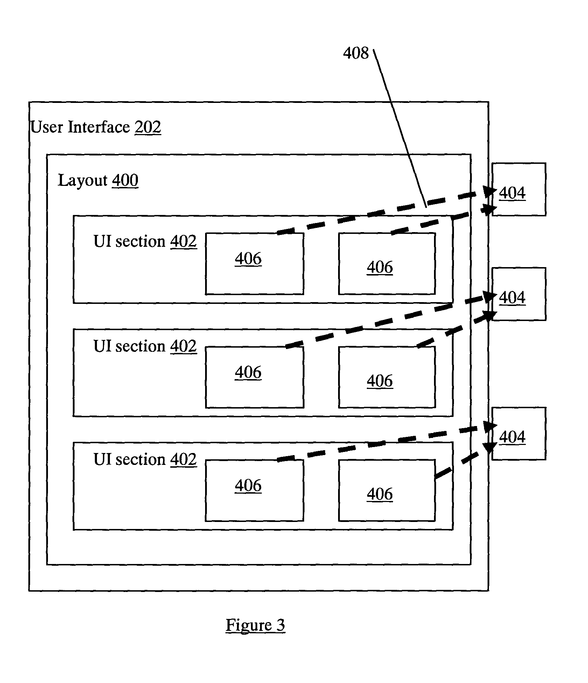

Referring to Figures 2 and 3, the wireless applications 302 are configured to have a plurality of data component definitions, expressed in a structured definition language, such that a repetitive layout scheme (further defined below) of the framework 206 operates on a collection of related data objects 404 represented by a selected one of the data components. The data components consist of a series of data field definitions written in such as but not limited to HTML, XHTML, XML and other structured definition languages, wherein the data objects 404 are data instances according to the data field definitions. It is noted that data object definitions provide definitions of the structure of data fields and their corresponding data types, such that data objects 404 are instances of a particular data object 404 definition. Data Fields comprise the data object 404 definitions and every data field has an associated data type. Further, Complex Data Fields contain a structure of sub-data fields. The definitions of the data objects 404 are included in the schema of the application 302. These data definitions provide a data model for defining the data objects of the application 302.

Referring again to Figure 3, a resultant layout 400 of the scheme is presented to the user interface 202 (see Figure 1) as a UI Screen having a set of UI elements defining the user interface 202, which is presented to the user at a given moment. The layout 400 consists of one UI section 402 format that is repeated for every data object 404 in the collection, and can be defined as a UI element that specifies the positioning of UI controls 406 such that different layout 400 types would dictate different ordering of UI controls 406 on the screen of the user interface 202. Each UI section 402 is composed of a set of UI controls or sub-layouts 406. The UI controls 406 in each section 402 are associated with data field instances of the corresponding data objects 404. Each of the UI sections 402 include a set of UI controls 406 bound or mapped 408 to the fields of the respective data object 404 such that every UI Section 402 is bound 408 to one of the data objects 404 in the initial collection, used for building the layout 400. The user of the application 302 can select UI sections 402 on the user interface 202 (see Figure 1) and edit the controls 406 within them. Any modifications of the controls 406 are propagated to the data objects 404 mapped to the UI section 402. Similarly, all modifications (driven by the application 302 logic or incoming server messages 105) to the data objects 404 are reflected in the UI section 402 mapped to these data objects 404. Representation of the collection of the related data objects 404 is facilitated through the use of the intelligent Device Runtime framework 206, as further described below.

### Communication Device

Referring to again to Figure 1, the device 100 is such as but not limited to mobile telephones, PDAs, two-way pagers or dual-mode communication devices. The device 100 include a network connection interface 200, such as a wireless transceiver, coupled via connection 218 to a device infrastructure 204. The connection interface 200 is connectable during operation of the device 100 to the wireless network 104, such as by wireless links (e.g., RF, IR, etc.), which enables the device 100 to communicate with other devices 100 and with external systems (such as the web service) via the network 104 and to coordinate the requests/response messages 105 between the client application programs 302 and the external systems. The network 104 supports the transmission of data in the requests/response messages 105 between device100 and external systems, which are connected to the network 104. The network 104 may also support voice communication for telephone calls between the device 100 and devices 100 which are external to the network 104. A wireless data transmission protocol can be used by the wireless network 104, such as but not limited to DataTAC, GPRS or CDMA.

Referring again to Figure 1, the device 100 also has the user interface 202, coupled to the device infrastructure 204 by connection 222, to interact with a user (not shown). The user interface 202 can include one or more user input devices such as but not limited to a QWERTY keyboard, a keypad, a trackwheel, a stylus, a mouse, a microphone and the user output device such as an LCD screen display and/or a speaker. If the screen is touch sensitive, then the display can also be used as the user input device as controlled by the device infrastructure 204. The user interface 202 is employed by the user of the device 100 to coordinate the requests/response message messages 105 over the network 104, as well as execution of the application 302 on the device 100 through user actions.

Referring again to Figure 1, operation of the device 100 is enabled by the device infrastructure 204. The device infrastructure 204 includes the computer processor 208 and the associated memory module 210. The computer processor 208 manipulates the operation of the network interface 200, the user interface 202 and the framework 206 of the communication device 100 by executing related instructions, which are provided by an operating system and client application programs 302 located in the memory module 210. Further, it is recognized that the device infrastructure 204 can include a computer readable storage medium 212 coupled to the processor 208 for providing instructions to the processor and/or to load/update client application programs 302 in the memory module 210. The computer readable medium 212 can include hardware and/or software such as, by way of example only, magnetic disks, magnetic tape, optically readable medium such as CD/DVD ROMS, and memory cards. In each case, the computer readable medium 212 may take the form of a small disk, floppy diskette, cassette, hard disk drive, solid state memory card, or RAM provided in the memory module 210. It should be noted that the above listed example computer readable mediums 212 can be used either alone or in combination.

### Framework of Device

Referring to Figures 1 and 2, the framework 206 of the device 100 is coupled to the device infrastructure 204 by the connection 220. The client runtime environment of the device 100 is provided by the framework 206, and is preferably capable of generating, hosting and executing the client application programs 302. The device runtime can be thought of as an intelligent software framework 206 that provides a set of basic services 304 to manage and execute typical application 302 behavior, such as but not limited to persistence, provisioning, messaging, screen navigation and user interface/screen services. Therefore, framework 206 provides the native client runtime environment for the client application programs 302 and is the interface to the device 100 functionality of the processor 208 and associated operating system of the device infrastructure 204. The framework 206 provides the runtime environment by preferably supplying a controlled, secure and stable environment on the device 100, in which the application programs 302 execute. The framework 206 also has a screen manager 306, which can be defined as one of the services 304 that coordinates the collection of data objects 404 and generated the appropriate layout 400 (see Figure 3) as needed during execution of the application 302 on the device 100.

Referring to Figure 1, the framework 206 provides services 304 (a standard set of generic services) to the client application programs 302, in the event certain services are not included as part of the application 302 or received as separate components (not shown) as part of the application program 302. The application program 302 has communications 214 with the services 304, as needed. It is recognized that a portion of the operating system of the device infrastructure 204 (see Figure 1) can represent the any of the services 304. It is recognized that the services 304 of the communication device 100 can provide functionality to the application programs 302, which can include the services described above. Further, the services 304 can be integrated with the application 302 rather than provided as a separate framework. In any event, the component application programs 302 can have access to the functionality of the communication device 100 through integrated and/or separate services 304, as further described below. The services 304 include the UI service which manages the representation of the application programs 302 as they are output on the output device of the user interface 202, as provided by the screen manager 306 (see Figure 2). The provisioning service of the services 304 manages the provisioning of the software applications 302 on the communication device 100. The persistence service of the services 304 allows the application programs 302 to store data in the memory module 210, including the data objects 404 (see Figure 3).

Referring again to Figures 2 and 3, the screen manager 306 of the framework 206 uses the memory 210 as a Data Store for a repository of the data objects 404. This repository contains the objects 404 that need to be presented to the user of the device 100 via the user interface 202. The manager 306 also has a Data Composer 500, which dynamically creates data object 404 definitions for dynamic structured definition language content of the applications 302. This process is facilitated by the structured definition language Schema defined during the development of the wireless application 302. It is noted that the structured definition language Schema (such as but not limited to XML based schema) provides supplementary metadata defining how the application 302 content can be mapped to a corresponding data object 404 definition defined by the data components of the application 302. The data composer 500 can dynamically create data objects 404 from the application 302 schema and makes the created data objects 404 available to a Rules Engine 502.

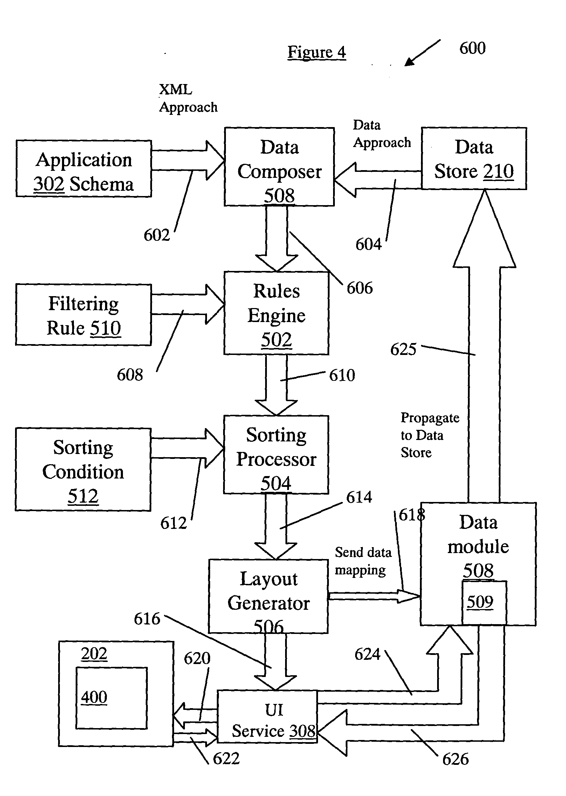

The Rules Engine 502 selects which set of data objects 404 (obtained from the composer 500 and/or the memory 210) should be included in the collection used to generate the Repetitive Layout 400 (see Figure 3). This process is facilitated by a Filtering Rule defined during the development of the wireless application 302, which provides supplementary metadata defining the filtering rule by which the data objects 404 should be filtered, if applicable. The rules engine 502 can supply the collection of data objects 404 for display to a Sorting Processor 504, which sorts the collection of data objects 404 according to a sorting condition. The Sorting Condition is defined during the development of the wireless application 302 and provides supplementary metadata defining the sorting rule(s) by which the collection of data objects 404 should be sorted. The sorting processor 504 provides the sorted (if applicable) and filtered (if applicable) to a layout generator 506, which generates a corresponding UI section 402 for every data object 404 in the provided collection to generate the layout 400. The UI sections 402 consist of the UI controls or UI sub-layouts 406 that correspond to the definition of the data objects 404 in the collection. Note, the data definition(s) can be included in the schema of the application represented by the data components. The layout generator 506 makes the layout 400 available to the UI service 308, which then sends the layout 400 to the user interface 202. The layout generator 506 also makes available to a data dispatcher 508 (or data module) the individual relations (mappings) between the respective data objects 404 and the UI sections 402, which are then stored in a mapping table 509 (see Figure 4) coupled to the data dispatcher 508.

Once the layout 400 is initialized on the user interface 202, the screen manager 306 uses the data dispatcher 508 to maintain integrity between the UI sections 402 and the corresponding data objects 404 displayed in the layout 400. When one of the UI controls 406 is modified by the user via the user interface 202, the Data Dispatcher 508 is responsible for propagating the change to the right data object 404 in the memory 210. When one of the data objects 404 in the layout's 400 collection is modified, the Data Dispatcher 508 is responsible for updating the corresponding UI control 406 to reflect the change in the data object 404, by referring to the corresponding mapping 408 entry in the table 509.

### Generation of Layout

Referring to Figure 4, there are such as but not limited to two approaches for generation 600 of the layout 400 depending on the initial data source of the data objects 404 (see Figure 2), namely a definition (e.g. XML) Approach shown at step 602 and a Data Approach shown at step 604. The method 600 for dynamic generation of repetitive UI layouts 400 provides how the UI layout 400 is generated from the collection of data objects 404. The XML approach at step 602 supplies data for the Repetitive Layout 400 out of a collection of XML nodes, as further described below. The Data approach at step 604 supplies data for the Repetitive Layout 400 out of data objects 404 stored in the memory 210. Data objects 404 consist of a set of data fields. Every Data object 404 is an instance of a particular Data Definition provided in the schema of the application 302. Once generated/retrieved, the data objects 404 are provided to the rules engine 502 at step 606 and then filtered at step 608(if applicable) based on a predefined rule 510 specified during development time of the application 302. It is noted that the data approach at step 604 can be applicable for execution environment frameworks 206 (see Figure 1) where data is stored in data components instead of using a generic persistence model.

### Step 602: Dynamic data object 404 generation (Data Composer 508 stage)

This step 602 is used only for the XML approach where a collection of XML nodes (or other structured definition languages) is provided as an input. The step 602 is omitted if all the data objects 404 are provided by the data approach.

The Data Composer 508 retrieves the data object 404 definition of the application 302, such that the Data Composer 508 generates data object 404 definition based on the provided XML Schema of the application 302, such as by a server (not shown) connected to the device 100 via the network 104 (see Figure 1). The XML Schema is predefined during the development of the wireless application 302, as defined by a developer of the wireless application 302, and rules to translate an XML data stream (based on the predefined arbitrary XML Schema) into a format that is predefined and well understood by both parties (the Data Composer 508 and the writer of the translation rules).
The following example shows an arbitrary XML data fragment of the XML schema: 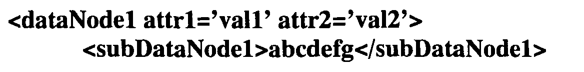 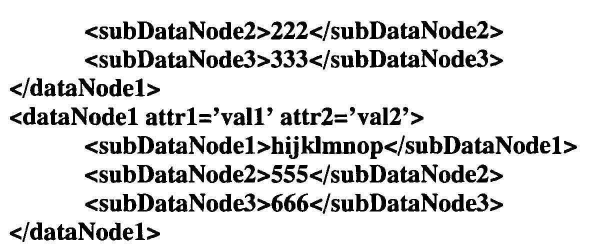 The Data Composer 508 uses the schema definition provided by the application developer containing the data field definitions 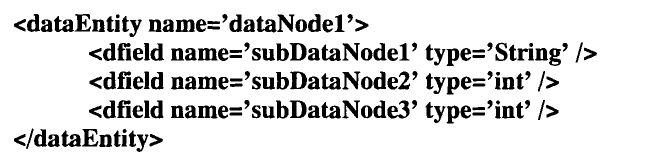 and dynamically applies translation rules to convert data into application acceptable format (as per provided schema) and generate well formed XML data objects 404:

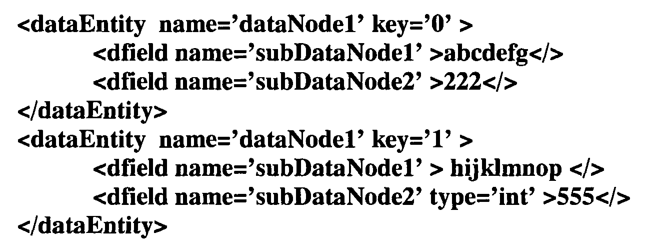

It is noted that at step 616 (further described below) the Layout Generator 506 consumes these data objects 404 and generates the UI Section 402 (see Figure 3) for each one of them based on the repetitive layout scheme. **Note 1:** In the example above the element 'subDataNode3' is not used by the application 302, therefore the translation rules exclude 'subDataNode3' element from the generated XML output. **Note 2:** The data translation rules could be implemented using XSL Transformations (XSLT).

### Step 604

The Data approach at step 604 supplies data for the Repetitive Layout 400 out of data objects 404 stored in the memory 210.

### Step 606

The data objects 404 (either dynamically generated and/or retrieved from the memory 210) are then transferred to the rules engine502 by the data composer 508 at step 606.

### Step 608: Determine the collection of data objects 404 for presentation by the user interface (Rules Engine 502 stage)

During this step 608, the initial collection of data objects 404 can be filtered by the Rules Engine 502 based on the predefined filtering rule 510. The filtering rule 510 may be specified using one of the following methods such as but not limited to:
1) ECMAScript for XML (E4X) logical comparison blocks invoked for every data object 404 or XML node in the initial collection;
2) A visibility condition expressed in formal structured language supporting logical operand evaluation and comparison. The following example shows visibility condition (limiting rule) expressed in SQL syntax:
   where age > 30
   last_name = 'Jones'
   where first_name='Mary' and last_name='Williams'; and
3) XPath statements applied to the XML nodes.

### Step 610

The filtered data objects 404 are then provided 610 to the sorting processor 504.

### Step 612: Sort the collection of data entities (Sorting Processor 504 stage)

During this step 612, the Sorting Processor 504 sorts the collection of data objects 404 provided by the rules engine 502. The sorting is performed according to the predefined sorting condition 512. The sorting condition 512 may be specified during the development of the wireless application 302. One of the following mechanisms may be used for specifying a sorting condition such as but not limited to:
1) ECMAScript for XML (E4X) comparison blocks invoked for every data object 404 or XML node in the initial collection;
2) A visibility condition expressed in formal structured language supporting operand evaluation and comparison. The following example shows visibility condition (limiting rule) expressed in SQL syntax:
   - where age > 30
   - last_name = 'Jones'
   - where first_name='Mary' and last_name='Williams'; and
3) XPath statements applied to the XML nodes.

The sorting order may be defined also at runtime by the user of the wireless application 302 by selecting a sorting data field. In this case the underlying framework 206 would provide the necessary user interface (e.g. a drop down box containing a list of all data fields bounded to the UI sections 402).

### Step 614

The sorted data objects 404 are then provided 614 to the layout generator 506.

### Step 616: Generate UI Layout 400 (Layout Generator 506 stage)

At this step the Layout Generator 506 generates the UI Layout 400 for each of the data objects 404 supplied by the sorting processor 504, such that each of the data objects 404 in the collection are instances of the same data object definition (i.e. same number, order, and type of data fields as per the definition). Referring to Figure 3:
■ For every data object 404 in the collection supplied by "Step 614" a corresponding UI section 402 is created. The Data Dispatcher 508 records at step 618 the relation between the UI section 402 and each of the data objects 404 as the mapping 408. The mapping 408 creates a two way communication mechanism between the respective UI control and linked data object 404;
■ UI controls 406 are created and added to every UI section 402. Each UI control 406 is created for every field in the data object 404 associated to the UI section 402. The type of the UI control 406 is determined based on the data type of the field. For example if the field's type is date then a date aware UI control 406 is created; and
■ Nested UI layouts 406 are created and added to the UI section 402 for every complex data field.
It should be noted that the content of the UI section 402 as generated by the layout generator 506 is then applied repetitively to each of the data objects 404 of the collection supplied to the layout generator. The completed layout 400 is then made available to the UI service 308.

### Step 620

The layout 400 is then provided 620 to the user interface 202.

### Steps 622, 624, 625: Propagate UI Changes Back to the Data Model (Data Dispatcher 508 stage)

Once the Repetitive Layout 400 is generated and visualized on the user interface 202, the user can select UI sections 402 and modify controls 406. When one of the controls 406 is modified, this change of state of the UI controls 406 is communicated back to the UI service 308 at step 622. The Data Dispatcher 508 communicates this change at step 624 by the UI service 308. The Data Dispatcher 508 or data module is responsible for propagating the change back to the data object 404 in the memory 210 (at step 625) associated with the current UI section 402 and the data field bound to the changed UI control 406 (recorded via the mapping 408 - see Figure 3). To accomplish this the Data Dispatcher/module 508 has to keep track of the relations/mappings 408 between UI sections 402 and data objects 404.

### Step 626,620: Propagating data changes to the Repetitive Layout 400

The data objects 404, or the XML nodes of the schema of the application 302, bound to the UI sections 402 may change. These changes are propagated by the Data Dispatcher 308 to the UI service 308 at step 626. The UI controls 406 of the corresponding UI sections 402 in the layout 400 on the user interface 202 are then synchronized (at step 620) by the UI service 308 with the associated changed data fields of the updated data objects 404.

### Step 625 revisited: Propagate changes to the XML nodes

If the data object 404 that has been generated dynamically from the XML node of the schema of the application 302 has changed, then the modified data values are propagated back to the corresponding XML node of the schema. The Data Dispatcher 508 maintains the relationship between the data object 404 and the original XML nodes. On changes propagated from the Repetitive UI layout 400, the Data Dispatcher 508 constructs an intermediary XML form only for the data objects 404 that have changed.
The intermediary form of the changed dataNode1 (key='0') would look like such as but not limited to: 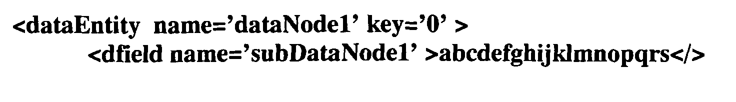 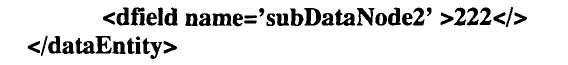 The transformation rules used by the data composer 508, as described above, would generate the following example XML: 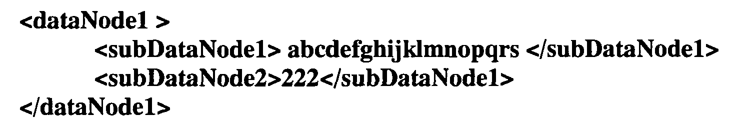 which could then be stored in the memory 210. The above XML corresponding to the data objects 404 that have been changed and the original XML node could be parsed into a DOM tree as is known in the art and traversed in parallel, setting new values in the leaf nodes that have changed.

### Sample Scenario

Here is a sample usage of the repetitive layout scheme as described above:

### Define data object 404 definition

Below is a definition of a sample data object 404 containing 4 fields.

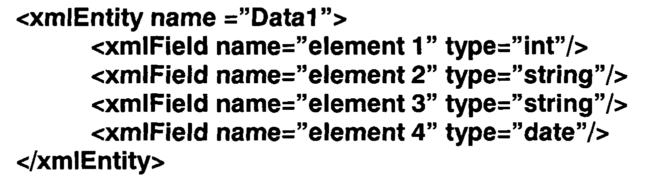

### Define UI metadata

Below is a definition of a sample screen definition containing the repetitive layout 400. Filtering and sorting rules 510, 512 are specified for the layout 400. The layout 400 is associated to all data objects 404 that are instances of the "Data1" definition.

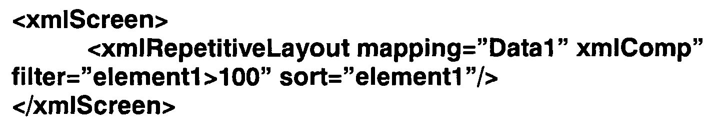

### Rules engine 502 stage

The Rules Engine 502 looks in the collection of all "Data1' data objects 404 and filters those that do not match the condition "element1>100". A new collection of data objects 404 is composed and sent to the Sorting Processor 504.

### Sorting Processor 504 stage

The Sorting Processor 504 sorts the collection provided by the Rules Engine 502. According to the sorting condition 512, the collection is sorted by the first field of every data object 404 - "element1".

### Generating the UI layout 400

For every data object 404 in the collection the UI section 402, according to the repetitive format of the UI section 402 created by the layout generator 506, is applied. The Data Dispatcher 508 adds mapping information 408 to its mapping table (not shown) about every pair of UI section 402 and corresponding data object 404. Based on the data object 404 definition the following UI controls 406 are created and added to every UI section 402:
- **name="control 1" mapping="element 1" type="numeric"**
- **name="control 2" mapping="element 2" type="text"**
- **name="control 3" mapping="element 3" type="text"**
- **name="control 4" mapping="element 4" type="date"**
Here is a sample of the final definition of the user interface 202 screen having four control sections 402:

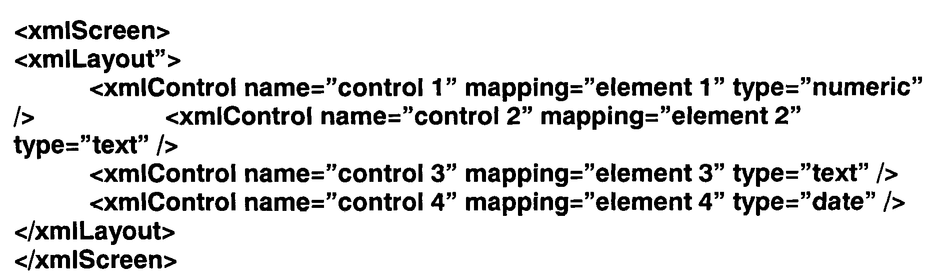

### Propagating UI changes back to the data objects 404

The user enters new values for "control 1" and "control 2" controls 406 in the second UI section 402. The Data Dispatcher 508 uses its mapping table to resolve the data object 404 mapped to the second UI section 402. The resolved object 404 is modified by assigning new values to the object data fields "element 1" and "element 2".

Although the disclosure herein has been drawn to one or more exemplary systems and methods, many variations will be apparent to those knowledgeable in the field, and such variations are within the scope of the application. For example, although XML and a subset of ECMAScript are used in the examples provided, other languages and language variants may be used to define the applications 302.

## Claims

1. A method for generating a layout for a wireless application for display on a user interface (UI) of a wireless device, the layout having a selected UI section format repeated for every data object in a collection of data objects, the method comprising the steps of:
determining the collection of data objects for presentation on the user interface, each of the data objects in the collection being an instance of the same data model having a first data field definition for defining a first data field of each of the data objects, the first data field definition expressed in a structured definition language;
associating a respective UI control to the first data field of each of the data objects according to the first data field definition;
assigning each of the UI controls to a respective one of the UI sections;
mapping each of the UI sections to a respective one of the data objects to form a plurality of UI section and data object pairs;
recording each of the mappings for each pair in a reference table; and
initializing the layout on the user interface;
wherein the states of the UI controls are changed through user events via the user interface.

2. The method as claimed in claim 1, further comprising the steps of associating a respective UI control to a second data field of each of the data objects according to a second data field definition, such that each of the UI controls for the second data fields are assigned to the respective one of the UI sections associated with the first data field.

3. The method as claimed in claim 2, wherein there are at least three UI controls for each UI section, each of the UI controls associated with a respective one of the data fields of the data object mapped to the UI section.

4. The method as claimed in claim 2 further compris the step of applying a filtering rule to the collection of data objects to determine which of the data objects will be retained in the collection.

5. The method as claimed in any of claims 2 further compris the step of applying a sorting condition to the collection of data objects to determine which of the data objects will be retained in the collection.

6. The method as claimed in claim 4 or claim 5, wherein the filtering rule includes a logic statement.

7. The method as claimed in claim 5 or claim 6, wherein the sorting condition includes a logic statement.

8. The method as claimed in any of claims 2 to further comprising the step of defining the order of the UI controls in each of the UI sections by the UI section format.

9. The method as claimed in claim 8, wherein the UI controls include sub-layouts.

10. The method as claimed in claim 9, wherein the structured definition language comprises any of: Extensible Markup Language (XML) based languages, HyperText Markup Language (HTML); or Extensible HyperText Markup Language (XHTML).

11. The method as claimed in any of claims 2 to 10, wherein the mappings create respective bi-directional communication mechanisms between each of the data objects and their respective one of the UI controls.

12. The method as claimed in claim 11, wherein there are more that one of the UI controls associated with each of the data objects mapped to a respective UI section.

13. The method as claimed in claim 12 further comprising the step of propagating state changes of the UI controls due to the user events to the respective data object or to the respective structured definition language node used to dynamically generate the associated data object.

14. The method as claimed in claim 12 further comprising the step of propagating changes of one of the data objects to reflect a corresponding state change of the UI controls associated to the data object.

15. The method as claimed in claim 14, wherein the changes to the data objects is driven by the application logic or by a server message received by the device via a wireless network.

16. The method as claimed in any of claims 2 further comprising the step of dynamically generating the data objects from nodes expressed in the structured definition language, the nodes provided as input for the layout generation.

17. The method as claimed in claim 16, wherein the nodes are provided as schema related to the application.

18. The method as claimed in any of claims 2 further comprising the step of retrieving the data objects from a memory of the device.

19. A system for generating a layout for a wireless application for display on a user interface (UI) of a wireless device, the layout having a selected UI section format repeated for every data object in a collection of data objects, the system comprising:
a rules engine for determining the collection of data objects for presentation on the user interface, each of the data objects in the collection configured for being an instance of the same data model having a first data field definition for defining a first data field of each of the data objects, the first data field definition expressed in a structured definition language;
a layout generator for associating a respective UI control to the first data field of each of the data objects according to the first data field definition, and for assigning each of the UI controls to a respective one of the UI sections;
a data module for mapping each of the UI sections to a respective one of the data objects to form a plurality of UI section and data object pairs, and for recording each of the mappings for each pair in a reference table; and
a UI service for initializing the layout on the user interface;
wherein the states of the UI controls are changed through user events via the user interface.

20. The system as claimed in claim 19, wherein a respective UI control is associated to a second data field of each of the data objects according to a second data field definition, such that each of the UI controls for the second data fields are assigned to the respective one of the UI sections associated with the first data field.

21. The system as claimed in claim 20, wherein there are at least three UI controls for each UI section, each of the UI controls associated with a respective one of the data fields of the data object mapped to the UI section.

22. The system as claimed in claim 20 or claim 2 further comprising applying a filtering rule by the rules engine to the collection of data objects to determine which of the data objects will be retained in the collection.

23. The system as claimed in any of claims 20 to 22 further comprising a sorting module for applying a sorting condition to the collection of data objects to determine which of the data objects will be retained in the collection.

24. The system as claimed in claim 22 or claim 23, wherein the filtering rule includes a logic statement.

25. The system as claimed in claim 23 or claim 24, wherein the sorting condition includes a logic statement.

26. The system as claimed in any of claims 20 to 25,wherein the order of the UI controls is defined in each of the UI section by the UI section format.

27. The system as claimed in claim 26, wherein the UI controls include sub-layouts.

28. The system as claimed in claim 27, wherein the structured definition language is selected from the group comprising: XML based languages, HTML; and XHTML.

29. The system as claimed in any of claims 20 to 28, wherein the mappings create respective bi-directional communication mechanisms between each of the data objects and their respective one of the UI controls.

30. The system as claimed in claim 29, wherein there are more that one of the UI controls associated with each of the data objects mapped to a respective UI section.

31. The system as claimed in claim 3 further comprising a data module for propagating state changes of the UI controls due to the user events to the respective data object or to the respective structured definition language node used to dynamically generate the associated data object.

32. The system as claimed in claim 3 further comprising a data module for propagating changes of one of the data objects to reflect a corresponding state change of the UI controls associated to the data object.

33. The system as claimed in claim 32, wherein the changes to the data objects is driven by the application logic or by a server message received by the device via a wireless network.

34. The system as claimed in any of claims 2 further comprising a data composer for dynamically generating the data objects from nodes expressed in the structured definition language, the nodes provided as input for the layout generation.

35. The system as claimed in claim 34, wherein the nodes are provided as schema related to the application.

36. The system as claimed in any of claims 2 further comprising the rules engine retrieving the data objects from a memory of the device.

37. A computer program product for generating a layout for a wireless application for display on a user interface (UI) of a wireless device, the layout having a selected UI section format repeated for every data object in a collection of data objects, the computer program product comprising:
a computer readable medium;
a rules engine module stored on the computer readable medium for determining the collection of data objects for presentation on the user interface, each of the data objects in the collection configured for being an instance of the same data model having a first data field definition for defining a first data field of each of the data objects, the first data field definition expressed in a structured definition language;
a layout generator module stored on the computer readable medium for associating a respective UI control to the first data field of each of the data objects according to the first data field definition, and for assigning each of the UI controls to a respective one of the UI sections;
a data module stored on the computer readable medium for mapping each of the UI sections to a respective one of the data objects to form a plurality of UI section and data object pairs, and for recording each of the mappings for each pair in a reference table; and
a UI service module stored on the computer readable medium for initializing the layout on the user interface;
wherein the states of the UI controls are changed through user events via the user interface.
